# EUROPEAN PATENT APPLICATION

(11) **EP 3 142 433 A1**
(43) Date of publication of application: **15.03.2017**
(21) Application number: 14891139.9
(22) Date of filing: 08.05.2014
(51) Int. Cl.: H04W 72/04, H04W 8/00, H04W 28/18, H04W 92/18

(54) **WIRELESS COMMUNICATION SYSTEM, TERMINAL, BASE STATION AND PROCESSING METHOD**

(71) Applicant: Fujitsu Limited, Kawasaki-shi, Kanagawa 211-8588 (JP)
(72) Inventor: TANAKA, Yoshinori, Kawasaki-shi Kanagawa 211-8588 (JP)
(74) Representative: Schultes, Stephan
(86) International application number: PCT/JP2014/062410
(87) International publication number: WO 2015/170392

(57) **Abstract**

A terminal (110) detects another terminal (120) capable of performing direct wireless communication with the terminal (110) in a first band using a first detection signal of the first band, determines whether the terminal (110) is able to perform direct wireless communication with the other terminal (120) in the second band, by transmitting a second detection signal of a second band addressed to the detected other terminal (120), and executes the direct wireless communication with the other terminal (120) in at least one of the first band and the second band based on the result of determination. A base station (130) is a base station to which the terminal (110) is connected, and controls the transmission of each of the first detection signal and the second detection signal.

## Description

### TECHNICAL FIELD

The present invention relates to a wireless communications system, a terminal, a base station, and a processing method.

### BACKGROUND ART

According to a studied technique, in a cellular wireless communications system, in addition to a primary component carrier (PCC) that is a communication carrier operated in a band for which the communication common carrier of the cellular wireless communications system has a license (a licensed band), a band that is available without any license (an unlicensed band) and that is conventionally used in a wireless local area network (LAN) or the like is used as a secondary component carrier (SCC) bundled with the PCC.

Use of an unlicensed band not only for the communication between a base station and a terminal but also for device-to-device (D2D) communication among terminals to directly communicate with each other without use of a base station therebetween is under investigation.

For example, according to a known technique, a base station makes a reservation for necessary resources in an unlicensed band in response to a request for the D2D communication from a mobile station, and notifies the mobile station of information concerning the reservation (see, for example, Patent Document 1).

US Patent Application Publication No. 2012/0077510

### DISCLOSURE OF INVENTION

### PROBLEM TO BE SOLVED BY THE INVENTION

However, with conventional techniques, the frequencies of the PCC and the SCC may differ from each other when, for example, an unlicensed band is used as the SCC. When the D2D communication is executed, for example, the case may be present where a terminal detects on the PCC other terminals each capable of executing D2D communication and present around the terminal and, as a result, execution of the D2D communication on the SCC whose frequency differs from that of the PCC is difficult even between the terminals each determined to be capable of executing the D2D communication.

According to one aspect, an object of the present invention is to provide a wireless communications system, a terminal, a base station, and a processing method capable of detecting a terminal capable of executing the D2D communication on the SCC even when the frequencies of the PCC and the SCC differ from each other.

### MEANS FOR SOLVING PROBLEM

To solve the problems above and achieve an object, according to one aspect of the present invention, a wireless communications system, a terminal, a base station, and a processing method are proposed where a first terminal is configured to use a first detection signal of a first band and detect a second terminal capable of performing direct wireless communication with the first terminal in the first band, the first terminal determines whether the first terminal is able to perform direct wireless communication with the second terminal in a second band, by transmitting a second detection signal of the second band addressed to the detected second terminal, the first terminal performs direct wireless communication with the second terminal in at least one of the first band and the second band, based on a result of determination; and a base station to which the first terminal is connected, controls transmission of the first detection signal and the second detection signal.

According to another aspect of the present invention, a wireless communications system, a terminal, a base station, and a processing method are proposed where plural terminals each mutually detect another terminal capable of performing direct wireless communication with the terminal in the first band using a first detection signal of a first band, the terminals detected among the plural terminals by the first detection signal each determines whether the terminal is able to mutually perform direct wireless communication in the second band, by mutually transmitting a second detection signal of the second band, the plural terminals perform direct wireless communication in at least one of the first band and the second band based on a result of determination; and a base station to which the plural terminals are connected, controls transmission of the first detection signal and the second detection signal.

### EFFECT OF THE INVENTION

According to an aspect of the present invention, an effect is achieved in that a terminal may be detected that can execute the D2D communication on the SCC even when the frequencies of the PCC and the SCC differ from each other.

### BRIEF DESCRIPTION OF DRAWINGS

FIG. 1A is a diagram of an example of a wireless communications system according to a first embodiment;
FIG. 1B is a diagram of an example of signal flow in the wireless communications system depicted in FIG. 1A;
FIG. 2 is a diagram of an example of a wireless communications system according to a second embodiment;
FIG. 3A is a diagram of an example of an eNB according to the second embodiment;
FIG. 3B is a diagram of an example of signal flow in the eNB depicted in FIG. 3A;
FIG. 3C is a diagram of an example of hardware configuration of the eNB;
FIG. 3D is a diagram of an example of signal flow in the hardware configuration depicted in FIG. 3C;
FIG. 4A is a diagram of an example of a UE according to the second embodiment;
FIG. 4B is a diagram of an example of signal flow in the UE depicted in FIG. 4A;
FIG. 5 is a flowchart of an example of a start control process for D2D communication by the eNB according to the second embodiment;
FIG. 6 is a flowchart of an example of a start process of the D2D communication by the UE according to the second embodiment;
FIG. 7A is a diagram of first operation example of the wireless communications system according to the second embodiment;
FIG. 7B is a diagram of a second operation example of the wireless communications system according to the second embodiment
FIG. 8 is a flowchart of an example of a start control process of the D2D communication by the eNB according to a third embodiment;
FIG. 9 is a flowchart of an example of a start process of the D2D communication by a UE according to the third embodiment;
FIG. 10A is a diagram of a first operation example of the wireless communications system according to the third embodiment;
FIG. 10B is a diagram of a second operation example of the wireless communications system according to the third embodiment;
FIG. 11 is a diagram of an example of transmission of a discovery signal in a SCC;
FIG. 12A is a diagram (part 1) of an example of a discovery message; and
FIG. 12B is a diagram (part 2) of an example of the discovery message.

### BEST MODE(S) FOR CARRYING OUT THE INVENTION

Embodiments of a wireless communications system, a terminal, a base station, and a processing method according the present invention will be described in detail with reference to the accompanying drawings.

### (First Embodiment)

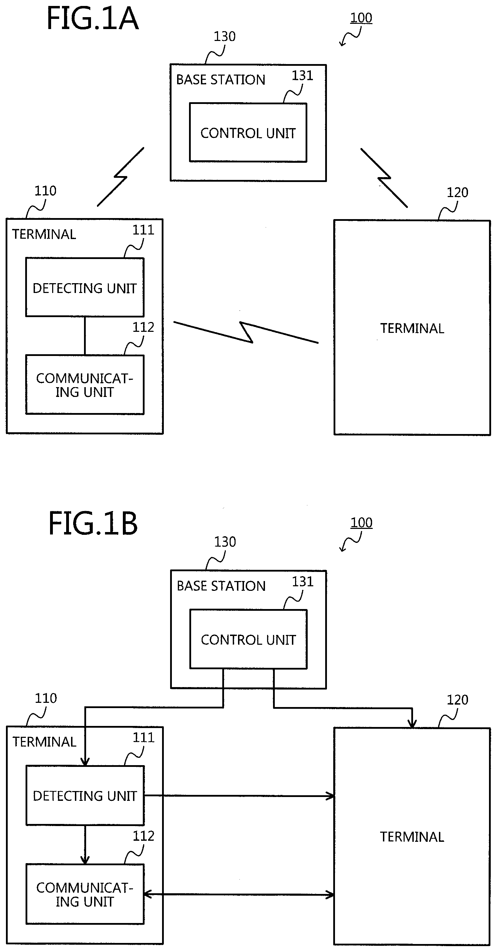

FIG. 1A is a diagram of an example of the wireless communications system according to a first embodiment. FIG. 1B is a diagram of an example of signal flow in the wireless communications system depicted in FIG. 1A. As depicted in FIG. 1A and FIG. 1B, the wireless communications system 100 according to the first embodiment includes terminals 110 and 120, and a base station 130. The base station 130 is the base station to which at least the terminal 110 of the terminals 110 and 120 is connected wirelessly.

The terminals 110 and 120 are devices capable of mutually performing direct wireless communication using at least a first band or a second band when the terminals 110 and 120 are close to each other. The second band is a frequency band different from the first band.

The terminal 110 includes a detecting unit 111 and a communicating unit 112. The detecting unit 111 detects another terminal capable of performing direct wireless communication with the terminal 110 in the first band using a first detection signal of the first band. For example, the terminal 110 may detect among terminals present around the terminal 110, another terminal capable of performing direct wireless communication with the terminal 110, by receiving the first detection signal of the first band transmitted from each of the terminals present around the terminal 110. This detection is, for example, passive scanning. It is assumed in the example depicted in FIG. 1A that the detecting unit 111 detects the terminal 120 as another terminal capable of performing direct wireless communication with the terminal 110.

The detecting unit 111 determines whether the terminal 110 can perform direct wireless communication with the terminal 120 in the second band, by transmitting a second detection signal of the second band, addressed to the detected terminal 120. For example, the detecting unit 111 transmits the second detection signal of the second band addressed to the detected terminal 120. The detecting unit 111 receives a response signal from the terminal 120 in response to the transmitted second detection signal and may thereby determine whether the terminal 110 can perform direct wireless communication with the terminal 120 in the second band. This process is, for example, active scanning. The detecting unit 111 outputs the result of the determination to the communicating unit 112.

The communicating unit 112 performs direct wireless communication with the terminal 120 in at least either the first band or the second band based on the result of the determination output from the detecting unit 111. For example, when the detecting unit 111 determines that the terminal 110 can perform direct wireless communication with the terminal 120 in the second band, the communicating unit 112 performs the direct wireless communication with the terminal 120 in the second band.

When the detecting unit 111 determines that the terminal 110 cannot perform direct wireless communication with the terminal 120 in the second band, the communicating unit 112 performs the direct wireless communication with the terminal 120 in the first band. When the detecting unit 111 determines that the terminal 110 can perform direct wireless communication with the terminal 120 in the second band, the communicating unit 112 may perform the direct wireless communication with the terminal 120 in both of the first band and the second band.

As described, according to the first embodiment, after the detection in the first band, a terminal transmits the second detection signal addressed to the detected other terminal and can thereby execute the detection in the second band. The direct wireless communication in the second band is thereby enabled even when the frequencies of the first band and the second band differ from each other. The other terminal with which the direct wireless communication can be performed can be detected efficiently even when the frequencies of the first band and the second band differ from each other.

The transmission of each of the first detection signal and the second detection signal is controlled by, for example, a control unit 131 included in the base station 130. For example, the control unit 131 controls the terminal 120 such that the terminal 120 transmits the first detection signal of the first band. The control unit 131 controls the terminal 110 such that the detecting unit 111 of the terminal 110 transmits the second detection signal of the second band. For example, the control unit 131 controls the terminals 110 and 120 by wirelessly transmitting control signals between the terminals 110 and 120.

### <Control by Base Station>

For example, the base station 130 transmits to a terminal connected to the base station (for example, the terminal 120), a signal that instructs transmission of the first detection signal. The base station 130 receives from the terminal 110, the result of the detection of the terminal 120 using the first detection signal and transmits based on the received result, a signal that instructs transmission of the second detection signal to the terminal 110. The base station 130 may thereby control the transmission of each of the first detection signal and the second detection signal.

### <Assignment of Radio Resources for Second detection signal>

For example, the base station 130 assigns to the terminal 110, radio resources of the second band for the terminal 110 to transmit the second detection signal. In response to this, the terminal 110 transmits the second detection signal using the radio resources assigned thereto by the base station 130. Thus, collision may be suppressed between the second detection signal and transmission by other terminals connected to the base station 130.

### <About First Band and Second Band>

The first band may be set to be a band dedicated to the wireless communications system 100 (the wireless communications system 100). The second band may be set to be a band shared between the wireless communications system 100 and another wireless communications system. The other wireless communications system is, for example, a wireless communications system whose communication scheme is different from that of the wireless communications system 100.

### (Modification According to First Embodiment)

When plural terminals including the terminals 110 and 120 execute the detection in the first band, each of the detected terminals may determine whether the terminal can perform direct wireless communication with the other terminals in the second band, by mutually transmitting the second detection signal of the second band.

For example, it is assumed that at least both of the terminals 110 and 120 detect each other by transmitting and receiving the first detection signal of the first band. In this case, each of the detected terminals 110 determines whether direct wireless communication can be performed mutually in the second band, by mutually transmitting the second detection signal of the second band. This process is, for example, passive scanning.

When terminals are present that detect each other in addition to the terminals 110 and 120, the terminals each also determine whether direct wireless communication can be performed mutually in the second band, by mutually transmitting the second detection signal of the second band (passive scanning).

In this manner, in the first embodiment, after the detection in the first band, limited to the detected terminals, the detected terminals may execute the detection in the second band by mutually transmitting the second detection signal of the second band. In this case, the direct wireless communication in the second band may also be performed even when the frequencies of the first band and the second band differ from each other. Other terminals with which the direct wireless communication may be performed, may be efficiently be detected even when the frequencies of the first band and the second band differ from each other.

### <Control by Base Station>

For example, the base station 130 transmits a signal that instructs transmission of the first detection signal to the terminal connecting to the base station 130 (for example, the terminal 120). The base station 130 receives from the terminal 110, the result of the detection of the terminal 120 using the first detection signal and transmits to each of the terminals 110 and 120 based on the received result, a signal that instructs transmission of the second detection signal. The base station 130 may thereby control the transmission of the first detection signal and the second detection signal.

### <Assignment of Radio Resources for Second detection signal>

For example, the base station 130 assigns to the terminal 110, radio resources of the second band for the terminal 110 to transmit the second detection signal. In response to this, the terminal 110 transmits the second detection signal using the radio resources assigned thereto by the base station 130. Thus, collision may be suppressed between the second detection signal and transmission by the other terminal connected to the base station 130.

### <Reservation of Radio Resources for Second Detection Signal>

The base station 130 transmits using the second band, a reservation signal that reserves the radio resources of the second band to transmit the second detection signal. In this case, each of the terminals 110 and 120 mutually transmits the second detection signal using the radio resources reserved by the reservation signal. Thus, collision may be suppressed between the second detection signal and other signals in the second band.

The base station 130 may transmit in the first band, the reservation signal that reserves the radio resources of the second band to transmit the second detection signal. Thus, collision may be suppressed between the second detection signal and other signals in the first band and the second band.

### <About First Band and Second Band>

The first band may be set to be, for example, a band dedicated to the wireless communications system 100 (the wireless communications system 100). The second band may be set to be a band shared between the wireless communications system 100 and another wireless communications system. The other wireless communications system is, for example, a wireless communications system whose communication scheme is different from that of the wireless communications system 100.

### (Second Embodiment)

### (Wireless Communications System According to Second Embodiment)

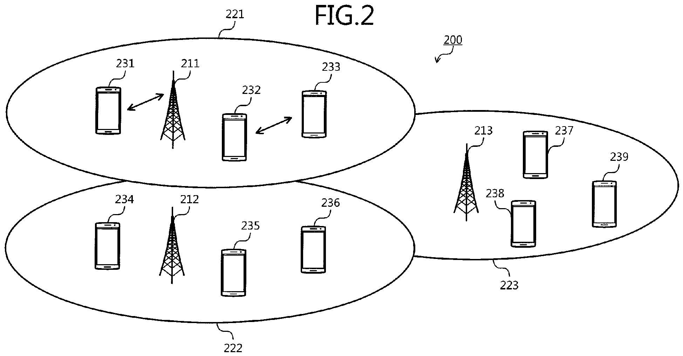

FIG. 2 is a diagram of an example of a wireless communications system according to the second embodiment. As depicted in FIG. 2, the wireless communications system 200 according to the second embodiment includes eNBs 211 to 213 and UEs 231 to 239.

The eNBs 211 to 213 (evolved Node Bs) are macro base stations that respectively form macro cells 221 to 223. The UEs 231 to 233 (User Equipment: user terminals) are present in the macro cell 221 and may perform wireless communication with the eNB 211. The UEs 234 to 236 are present in the macro cell 222 and may perform wireless communication with the eNB 212. The UEs 237 to 239 are present in the macro cell 223 and may perform wireless communication with the eNB 213.

In the example depicted in FIG. 2, in the macro cell 221, the UE 231 performs wireless communication with the eNB 211. In the macro cell 221, the UEs 232 and 233 execute, for example, D2D communication with each other under the control of the eNB 211.

The wireless communications system 100 depicted in FIG. 1A and FIG. 1B may be realized by, for example, the eNB 211 and the UEs 231 to 233. In this case, for example, the terminals 110 and 120 depicted in FIG. 1A and FIG. 1B may be applied to the UEs 231 to 239. The base station 130 depicted in FIG. 1A and 1B may be applied to the eNBs 211 to 213.

A case will be described where the wireless communications system 100 is applied to the eNB 211 and the UEs in the macro cell 221 (for example, the UEs 232 and 233).

### (eNB According to Second Embodiment)

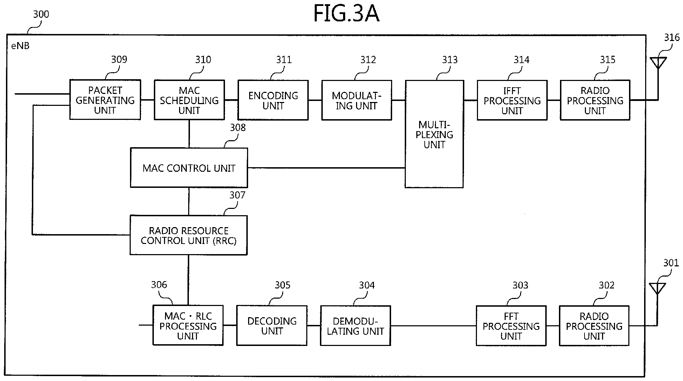

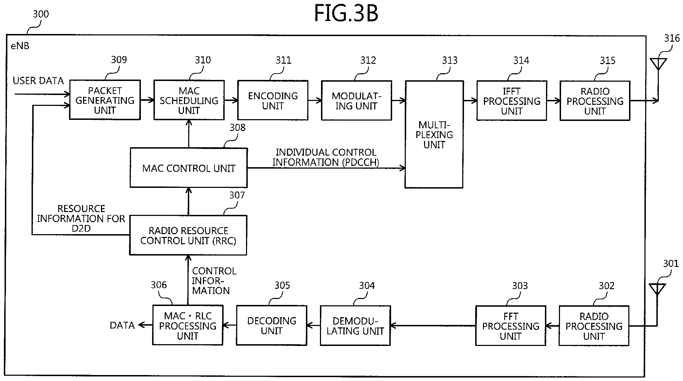

FIG. 3A is a diagram of an example of the eNB according to the second embodiment. FIG. 3B is a diagram of an example of signal flow in the eNB depicted in FIG. 3A. The eNB 211 depicted in FIG. 2 may be realized by, for example, an eNB 300 depicted in FIG. 3A and FIG. 3B. The eNB 300 includes an antenna 301, a radio processing unit 302, an FFT processing unit 303, a demodulating unit 304, a decoding unit 305, an MAC·RLC processing unit 306, a radio resource control unit 307, an MAC control unit 308, and a packet generating unit 309. The eNB 300 also includes an MAC scheduling unit 310, an encoding unit 311, a modulating unit 312, a multiplexing unit 313, an IFFT processing unit 314, a radio processing unit 315, and an antenna 316.

The antenna 301 receives a signal transmitted wirelessly from another wireless communications apparatus. The antenna 301 outputs the received signal to the radio processing unit 302. The radio processing unit 302 executes radio processing of the signal output from the antenna 301. The radio processing by the radio processing unit 302 includes, for example, frequency conversion from a high frequency band to a baseband. The radio processing unit 302 outputs the signal on which the radio processing is executed, to the FFT processing unit 303.

The FFT processing unit 303 executes an FFT (Fast Fourier Transform) process for the signal output from the radio processing unit 302. The signal is thereby converted from the signal in the time domain to a signal in the frequency domain. The FFT processing unit 303 outputs the signal on which the FFT process is executed, to the demodulating unit 304.

The demodulating unit 304 demodulates the signal output from the FFT processing unit 303. The demodulating unit 304 outputs the signal obtained by the demodulation, to the decoding unit 305. The decoding unit 305 decodes the signal output from the demodulating unit 304. The decoding unit 305 outputs the data obtained by the decoding, to the MAC-RLC processing unit 306.

The MAC·RLC processing unit 306 executes processing for each of an MAC (Media Access Control) layer and an RLC (Radio Link Control) layer based on the data output from the decoding unit 305. The MAC·RLC processing unit 306 outputs data obtained by the processing executed for the layers. The signal output from the MAC·RLC processing unit 306 is input into, for example, a processing unit in a higher-order layer of the eNB 300. The MAC·RLC processing unit 306 outputs control information such as feedback information included in the data obtained by the processing executed for the layers, to the radio resource control unit 307.

The radio resource control unit 307 executes radio resource control based on the control information output from the MAC·RLC processing unit 306. This radio resource control is a processing for an RRC layer. The radio resource control unit 307 outputs the control information based on the radio source control to the MAC control unit 308. The radio resource control unit 307 outputs resource information for D2D based on the radio resources control, to the packet generating unit 309.

The MAC control unit 308 executes control of the MAC layer based on the control information output from the radio resource control unit 307. The MAC control unit 308 outputs individual control information for the UE based on the control of the MAC layer, to the multiplexing unit 313. The individual control information is, for example, a PDCCH (Physical Downlink Control Channel). The MAC control unit 308 outputs control information based on the control of the MAC layer, to the MAC scheduling unit 310.

The packet generating unit 309 generates packets including user data output from a higher-order layer of the eNB 300 and the resource information for D2D output from the MAC control unit 308. The packet generating unit 309 outputs the generated packets to the MAC scheduling unit 310.

The MAC scheduling unit 310 executes scheduling for the MAC layer of the packets output from the packet generating unit 309, based on the control information output from the MAC control unit 308. The MAC scheduling unit 310 outputs the packets to the encoding unit 311 based on the result of the scheduling.

The encoding unit 311 encodes the packets output from the MAC scheduling unit 310. The encoding unit 311 outputs the encoded packets to the modulating unit 312. The modulating unit 312 executes modulation based on the packets output from the encoding unit 311. The modulating unit 312 outputs the signal obtained by the modulation to the multiplexing unit 313.

The multiplexing unit 313 multiplexes the individual control information output from the MAC control unit 308 and the signal output from the modulating unit 312 with each other. The multiplexing unit 313 outputs the signal obtained by the multiplexing to the IFFT processing unit 314.

The IFFT processing unit 314 executes an IFFT (Inverse Fast Fourier Transform) process on the signal output from the multiplexing unit 313. The signal is thereby converted from the signal in the frequency domain into a signal in the time domain. The IFFT processing unit 314 outputs the signal on which the IFFT process is executed, to the radio processing unit 315.

The radio processing unit 315 executes radio processing on the signal output from the IFFT processing unit 314. The radio processing by the radio processing unit 315 includes frequency conversion, for example, from the baseband to the high frequency band. The radio processing unit 315 outputs to the antenna 316, the signal on which the radio processing is executed. The antenna 316 wirelessly transmits the signal output from the radio processing unit 315 to another wireless communications apparatus.

The control unit 131 depicted in FIG. 1A and FIG. 1B may be realized by, for example, the configurations except the MAC control unit 308 of the configurations depicted in FIG. 3A and FIG. 3B. Alternatively, the control unit 131 depicted in FIG. 1A and FIG. 1B may be realized by, for example, the configurations (including the MAC control unit 308) depicted in FIG. 3A and FIG. 3B.

### (Hardware Configuration of eNB)

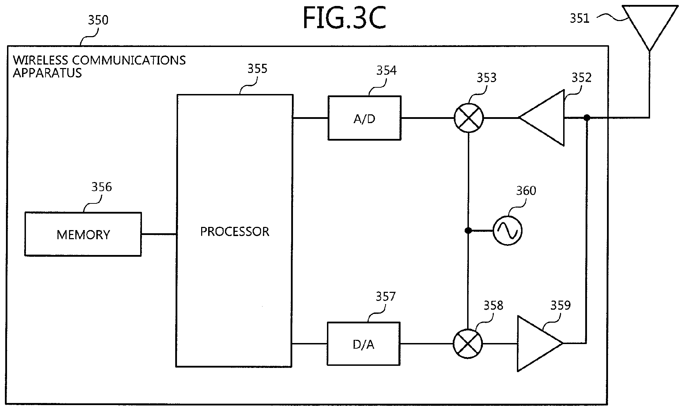

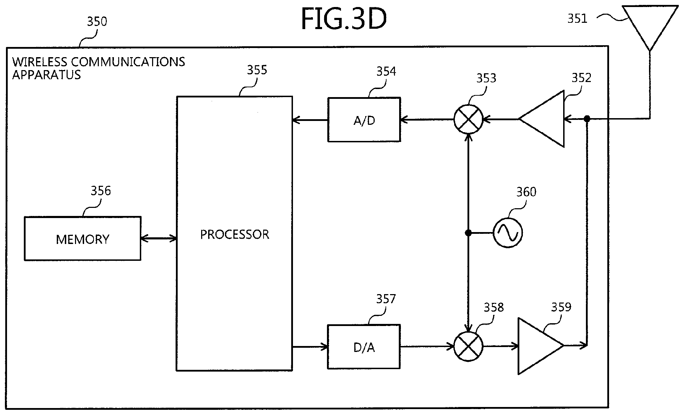

FIG. 3C is a diagram of an example of the hardware configuration of an eNB. FIG. 3D is a diagram of an example of signal flow in the hardware configuration depicted in FIG. 3C. The eNB 300 may be realized by, for example, a wireless communications apparatus 350 depicted in FIG. 3C and FIG. 3D.

The wireless communications apparatus 350 includes, for example, a transmitting and receiving antenna 351, an amplifier 352, a multiplying unit 353, an analog-digital converter 354, a processor 355, and a memory 356. The wireless communications apparatus 350 also includes a digital-analog converter 357, a multiplying unit 358, an amplifier 359, and an oscillator 360. The wireless communications apparatus 350 may include an interface that executes wired communication with an external communications apparatus.

The transmitting and receiving antenna 351 receives signals wirelessly transmitted from the vicinity of the wireless communications apparatus 350, and outputs the received signals to the amplifier 352. The transmitting and receiving antenna 351 wirelessly transmits the signal output from the amplifier 359 to the vicinity of the wireless communications apparatus 350.

The amplifier 352 amplifies the signal output from the transmitting and receiving antenna 351. The amplifier 352 outputs the amplified signal to the multiplying unit 353. The multiplying unit 353 multiplies the signal output from the amplifier 352 by a clock signal output from the oscillator 360 to thereby execute frequency conversion from the high frequency band to the baseband. The multiplying unit 353 outputs the frequency-converted signal to the analog-digital converter 354.

The analog-digital converter 354 (A/D) is an ADC (Analog/Digital Converter) that converts the signal output from the multiplying unit 353 from an analog signal to a digital signal. The analog-digital converter 354 outputs the signal converted into the digital signal to the processor 355.

The processor 355 supervises overall control of the wireless communications apparatus 350. The processor 355 may be realized by, for example, a CPU (Central Processing Unit) or a DSP (Digital Signal Processor). The processor 355 executes a reception process for the signal output from the analog digital converter 354. The processor 355 generates a signal to be transmitted by the wireless communications apparatus 350, and executes a transmission process to output the generated signal to the digital-analog converter 357.

The memory 356 includes, for example, a main memory and an auxiliary memory. The main memory is, for example, a RAM (Random Access Memory). The main memory is used as a working area of the processor 355. The auxiliary memory is a non-volatile memory such as, for example, a magnetic disk or a flash memory. The auxiliary memory stores therein various types of programs that operate the processor 355. The programs stored in the auxiliary memory are loaded onto the main memory to be executed by the processor 355. The auxiliary memory stores therein, for example, various types of threshold values determined in advance.

The digital-analog converter 357 is a DAC (Digital/Analog Converter) that converts the signal output from the processor 355 from a digital signal to an analog signal. The digital-analog converter 357 outputs the signal converted into the analog signal, to the multiplying unit 358.

The multiplying unit 358 multiplies the signal output from the digital-analog converter 357 by the clock signal output from the oscillator 360 to thereby execute frequency conversion from the baseband to the high frequency band. The multiplying unit 358 outputs the frequency-converted signal to the amplifier 359. The amplifier 359 amplifies the signal output from the digital-analog converter 357. The amplifier 359 outputs the amplified signal to the transmitting and receiving antenna 351.

The oscillator 360 oscillates the clock signal (an AC signal of a continuous wave) at a predetermined frequency. The oscillator 360 outputs the oscillated clock signal to the multiplying units 353 and 358.

The antennas 301 and 316 depicted in FIG. 3A and FIG. 3B may be realized by, for example, the transmitting and receiving antenna 351. The radio processing unit 302 and the radio processing unit 315 depicted in FIG. 3A and FIG. 3B may be realized by, for example, the amplifier 352, the multiplying unit 353, an analog-digital converter 354, the digital-analog converter 357, the multiplying unit 358, the amplifier 359, and the oscillator 360. The other configurations depicted in FIG. 3A and FIG. 3B may be realized by, for example, the processor 355 and the memory 356.

### (UE According to Second Embodiment)

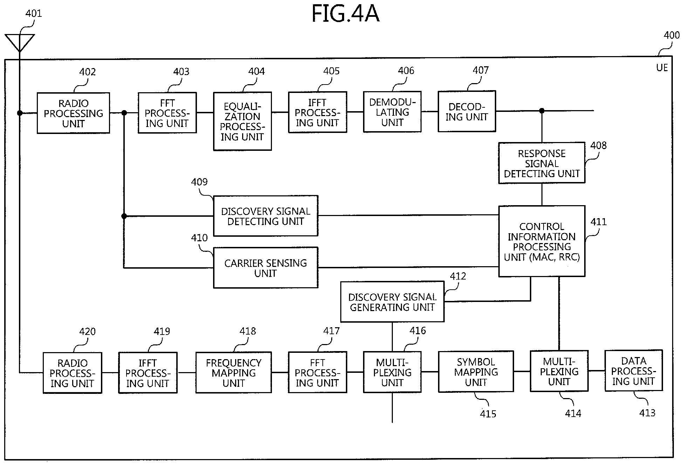

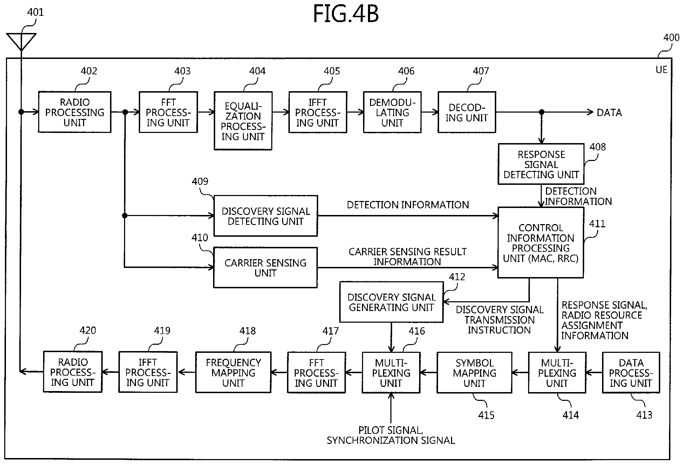

FIG. 4A is a diagram of an example of a UE according to the second embodiment. FIG. 4B is a diagram of an example of signal flow in the UE depicted in FIG. 4A. Each of the UEs 231 to 233 depicted in FIG. 2 may be realized by, for example, a UE 400 depicted in FIG. 4A and FIG. 4B.

The UE 400 includes an antenna 401, a radio processing unit 402, an FFT processing unit 403, an equalization processing unit 404, an IFFT processing unit 405, a demodulating unit 406, a decoding unit 407, and a response signal detecting unit 408. The UE 400 also includes a discovery signal detecting unit 409, a carrier sensing unit 410, a control information processing unit 411, and a discovery signal generating unit 412. The UE 400 further includes a data processing unit 413, a multiplexing unit 414, a symbol mapping unit 415, a multiplexing unit 416, an FFT processing unit 417, a frequency mapping unit 418, an IFFT processing unit 419, and a radio processing unit 420.

The antenna 401 receives a signal wirelessly transmitted from another wireless communications apparatus. The antenna 401 outputs the received signal to the radio processing unit 402. The antenna 401 wirelessly transmits to another wireless communications apparatus, a signal output from the radio processing unit 420.

The radio processing unit 402 executes radio processing of the signal output from the antenna 401. The radio processing by the radio processing unit 402 includes, for example, frequency conversion from a high frequency band to a baseband. The radio processing unit 402 outputs the signal on which the radio processing is executed, to the FFT processing unit 403, the discovery signal detecting unit 409, and the carrier sensing unit 410.

The FFT processing unit 403 executes an FFT process on the signal output from the radio processing unit 402. The signal is thereby converted from the signal in the time domain to a signal in the frequency domain. The FFT processing unit 403 outputs the signal on which the FFT process is executed, to the equalization processing unit 404.

The equalization processing unit 404 executes an equalization process om the signal output from the FFT processing unit 403. The equalization processing unit 404 outputs the signal on which the equalization process is executed to the IFFT processing unit 405. The IFFT processing unit 405 executes an IFFT process on the signal output from the equalization processing unit 404. The signal is thereby converted from the signal in the frequency domain into a signal in the time domain. The IFFT processing unit 405 outputs to the demodulating unit 406, the signal on which the IFFT process is executed.

The demodulating unit 406 demodulates the signal output from the IFFT processing unit 405. The demodulating unit 406 outputs to the decoding unit 407, the signal obtained by the demodulation. The decoding unit 407 decodes the signal output from the demodulating unit 406. The decoding unit 407 outputs data obtained by the decoding. The data output from the decoding unit 407 is input into, for example, a processing unit in a higher-order layer of the UE 400 and the response signal detecting unit 408. The data output from the decoding unit 407 includes, for example, user data.

The response signal detecting unit 408 detects a response signal transmitted from the other wireless communications apparatus and included in the data output from the decoding unit 407. The response signal detecting unit 408 outputs to the control information processing unit 411, detection information indicating the result of the detection of the response signal.

The discovery signal detecting unit 409 detects a discovery signal transmitted from another wireless communications apparatus and included in the signal output from the radio processing unit 402. The discovery signal includes, for example, an active scan signal and a passive scan signal. The discovery signal detecting unit 409 outputs detection information indicating the result of the detection of the discovery signal to the control information processing unit 411.

The carrier sensing unit 410 executes carrier sensing based on the signal output from the radio communicating unit 402. The carrier sensing unit 410 outputs carrier sensing result information indicating the result of the carrier sensing to the control information processing unit 411.

The control information processing unit 411 executes processing for, for example, the pieces of control information for the MAC layer and an RRC (Radio Resources Control) layer. For example, the control information processing unit 411 determines whether a response is present for the active scan signal transmitted from the UE 400, based on the detection information output from the response signal detecting unit 408.

The control information processing unit 411 executes control of transmission of a response signal in response to the active scan signal transmitted from the other UE, reception of the passive scan signal transmitted from the other UE, and the like, based on the detection information output from the discovery signal detecting unit 409. The control information processing unit 411 checks availability of the radio resources for the UE 400 to execute the communication, based on the carrier sensing result information output from the carrier sensing unit 410.

The control information processing unit 411 outputs a discovery signal transmission instruction that instructs the transmission of the discovery signal, to the discovery signal generating unit 412, based on the control signals received from the base station. The control information processing unit 411 outputs the response signal and pieces of control information such as the radio resource assignment information to the multiplexing unit 414, based on the processing results.

The discovery signal generating unit 412 generates a discovery signal, based on the discovery signal transmission instruction output from the control information processing unit 411. The discovery signal generating unit 412 outputs the generated discovery signal to the multiplexing unit 416.

The data processing unit 413 executes various types of data processing and outputs to the multiplexing unit 414, data to be transmitted based on the result of the data processing. The multiplexing unit 414 multiplexes the control information output from the control information processing unit 411 and the data to be transmitted output from the data processing unit 413 with each other, and outputs to the symbol mapping unit 415, a signal to be transmitted that is obtained by the multiplexing.

The symbol mapping unit 415 executes symbol mapping for the signal to be transmitted output from the multiplexing unit 414. The symbol mapping unit 415 outputs to the multiplexing unit 416, the signal to be transmitted and for which the symbol mapping is executed.

The multiplexing unit 416 multiplexes the discovery signal output from the discovery signal generating unit 412, the signal to be transmitted output from the symbol mapping unit 415, and a pilot signal and a synchronization signal from the UE 400, with each other. The multiplexing unit 416 outputs the signal acquired by the multiplexing to the FFT processing unit 417.

The FFT processing unit 417 executes an FFT process for the signal output from the multiplexing unit 416. The signal is thereby converted from the signal in the time domain into a signal in the frequency domain. The FFT processing unit 417 outputs to the frequency mapping unit 418, the signal for which the FFT process is executed. The frequency mapping unit 418 executes frequency mapping for the signal output from the FFT processing unit 417. The frequency mapping unit 418 outputs the signal for which the frequency mapping is executed to the IFFT processing unit 419.

The IFFT processing unit 419 executes an IFFT process on the signal output from the frequency mapping unit 418. The signal is thereby converted from the signal in the frequency domain into a signal in the time domain. The IFFT processing unit 419 outputs the signal on which the IFFT process is executed to the radio processing unit 420.

The radio processing unit 420 executes radio processing on the signal output from the IFFT processing unit 419. The radio processing by the radio processing unit 420 includes, for example, the frequency conversion from the baseband to the high frequency band. The radio processing unit 420 outputs the signal on which the radio processing is executed to the antenna 401.

A case has been described where the same antenna 401 is used for the wireless transmission and the wireless reception in the example depicted in FIG. 4A and FIG. 4B while an antenna for the wireless transmission and another antenna for the wireless reception may be disposed in the UE 400. The detecting unit 111 depicted in FIG. 1A and FIG. 1B may be realized by, for example, the antenna 401, the radio processing unit 402, the FFT processing unit 403, the equalization processing unit 404, the IFFT processing unit 405, the demodulating unit 406, the decoding unit 407, the response signal detecting unit 408, the discovery signal detecting unit 409, the carrier sensing unit 410, the control information processing unit 411, the discovery signal generating unit 412, the multiplexing unit 416, the FFT processing unit 417, the frequency mapping unit 418, the IFFT processing unit 419, and the radio processing unit 420.

The communicating unit 112 depicted in FIG. 1A and FIG. 1B may be realized by, for example, the antenna 401, the radio processing unit 402, the FFT processing unit 403, the equalization processing unit 404, the IFFT processing unit 405, the demodulating unit 406, the decoding unit 407, the response signal detecting unit 408, the control information processing unit 411, the discovery signal generating unit 412, the data processing unit 413, the multiplexing unit 414, the symbol mapping unit 415, the multiplexing unit 416, the FFT processing unit 417, the frequency mapping unit 418, the IFFT processing unit 419, and the radio processing unit 420.

### (Hardware Configuration of UE)

The UE 400 may be realized by, for example, the wireless communications apparatus 350 depicted in FIG. 3C and FIG. 3D. In this case, the wireless communications apparatus 350 may omit an interface that executes wired communication with an external communications apparatus.

The antenna 401 depicted in FIG. 4A and FIG. 4B may be realized by, for example, the transmitting and receiving antenna 351. The radio processing unit 402 and the radio processing unit 420 depicted in FIG. 4A and FIG. 4B may each be realized by, for example, the amplifier 352, the multiplying unit 353, the analog-digital converter 354, the digital-analog converter 357, the multiplying unit 358, the amplifier 359, and the oscillator 360. The other configurations depicted in FIG. 4A and FIG. 4B may be realized by, for example, the processor 355 and the memory 356.

### (Start Control Process for D2D Communication by eNB According to Second Embodiment)

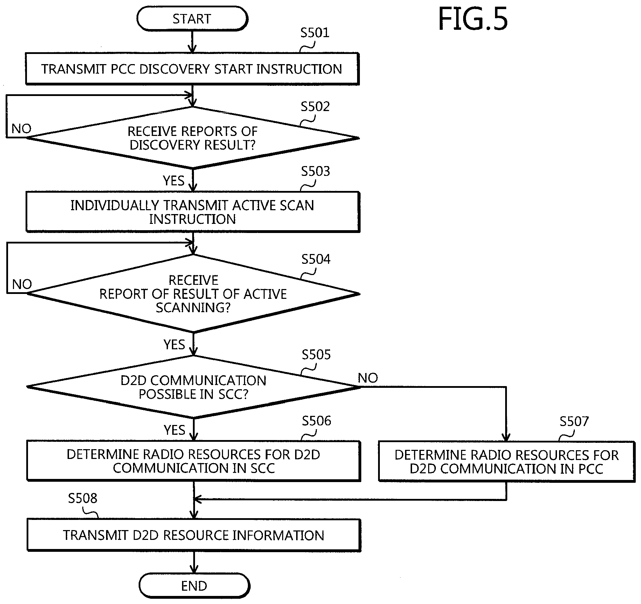

FIG. 5 is a flowchart of an example of a start control process for the D2D communication by the eNB according to the second embodiment. The eNB 300 according to the second embodiment executes, for example, process steps depicted in FIG. 5 as the start control process for the D2D communication.

The eNB 300 transmits a PCC discovery start instruction to each of the UEs (step S501). The PCC discovery start instruction is a signal that instructs the start of discovery on the PCC. The transmission at step S501 may be executed at various timings such as, for example, at that of the request from the UE connected to the eNB 300.

The eNB 300 determines whether the eNB 300 receives from each of the UEs, a report of the discovery result in response to the PCC discovery start instruction transmitted at step S501 (step S502) and waits until the eNB 300 receives the report (step S502: NO). The report of the discovery result includes, for example, information indicating the D2D communication counterpart determined by each of the UEs.

When the eNB 300 determines at step S502 that the eNB 300 has received the report (step S502: YES), the eNB 300 advances to the operation at step S503. The eNB 300 individually transmits an active scan instruction to each of the UEs to execute the D2D communication, based on the D2D communication counterpart indicated by the report received at step S502 (step S503). The active scan instruction is a signal that instructs active scanning in the SCC.

The eNB 300 determines whether the eNB 300 receives a report of the result of the active scanning in response to the active scan instruction transmitted at step S503 (step S504) and waits until the eNB 300 receives the report (step S504: NO). The report of the result of the active scanning includes, for example, information indicating whether each of the UEs to execute the D2D communication can execute the D2D communication in the SCC.

When the eNB 300 determines at step S504 that the eNB 300 has received the report (step S504: YES), the eNB 300 advances to the operation at step S505. The eNB 300 determines whether each of the UEs to execute the D2D communication can execute the D2D communication in the SCC, based on the report of the result of the active scanning received at step S504 (step S505).

When the eNB 300 determines at step S505 that the UE can execute the D2D communication in the SCC (step S505: YES), the eNB 300 determines the radio resources for the D2D communication in the SCC (step S506) and advances to the operation at step S508. The radio resources are, for example, a frequency resource and a time resource. When the eNB 300 determines that the UE cannot execute the D2D communication in the SCC (step S505: NO), the eNB 300 determines the radio resources for the D2D communication in the PCC (step S507).

The eNB 300 transmits D2D resource information indicating the radio resources determined at either step S506 or S507, to each of the UEs (step S508) and causes the series of process steps for the start control process for the D2D communication to come to an end. Each of the UEs thereby starts the D2D communication using the radio resources (the PCC or the SCC) indicated by the D2D resource information transmitted at step S508.

### (Start Process of D2D Communication by UE According to Second Embodiment)

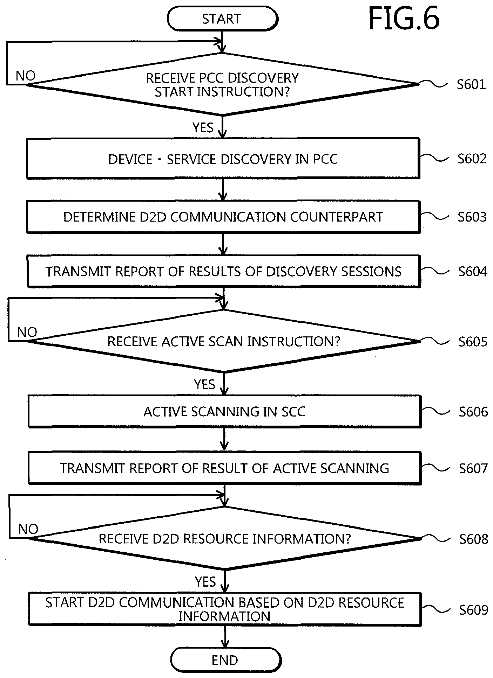

FIG. 6 is a flowchart of an example of a start process of the D2D communication by the UE according to the second embodiment. The UE 400 according to the second embodiment executes, for example, the steps depicted in FIG. 6 as the start process of the D2D communication.

The UE 400 determines whether the UE 400 receives a PCC discovery start instruction from the eNB 300 (step S601) and waits until the UE 400 receives the PCC discovery start instruction (step S601: NO). The PCC discovery start instruction is a signal that instructs the start of each discovery in the PCC. When the UE 400 determines that the UE 400 has received the PCC discovery start instruction (step S601: YES), the UE 400 executes device service discovery in the PCC (step S602).

The device service discovery includes, for example, device discovery to detect other UEs present around the UE 400 (a proximity degree detection function) and service discovery to detect services and application software supplied by the detected UE. The device service discovery is executed by transmitting and receiving the passive scan signal. For example, device service discovery defined in Release 12 of the LTE (Long Term Evolution) may be applied to the above device service discovery.

The UE 400 determines the D2D communication counterpart based on the result of the discovery sessions executed at step S602 (step S603). For example, the UE 400 determines the D2D communication counterpart from the UEs present around the UE 400 and each capable of executing a predetermined D2D communication service with the UE 400.

The UE 400 transmits the report of the result of the discovery sessions executed at step S602 to the eNB 300 (step S604). The report transmitted at step S604 is a signal that includes, for example, information concerning the terminal detected at step S602 (the identification number of the terminal, the reception level of the discovery signal, service information, and the like) and information indicating the D2D communication counterpart determined at step S603.

The UE 400 determines whether the UE 400 receives the active scan instruction (step S605) and waits until the UE 400 receives the active scan instruction (step S605: NO). The active scan instruction is a signal that instructs active scanning. When the UE 400 determines that the UE 400 has received the active scan instruction (step S605: YES), the UE 400 executes the active scanning in the SCC by transmitting and receiving the active scan signal of the SCC (step S606).

The UE 400 transmits a report of the result of the active scanning executed at step S606 to the eNB 300 (step S607). The report transmitted at step S607 is, for example, a signal that indicates whether the D2D communication in the SCC is executable with the D2D communication counterpart determined at step S603.

The UE 400 determines whether the UE 400 receives D2D resource information from the eNB 300 (step S608) and waits until the UE 400 receives the D2D resource information (step S608: NO). The D2D resource information is information that indicates the radio resources for the D2D communication. When the UE 400 determines that the UE 400 has received the D2D resource information (step S608: YES), the UE 400 starts the D2D communication based on the received D2D resource information (step S609) and causes the series of process steps for the D2D communication start process to come to an end.

### (First Operation Example of Wireless communications system According to Second Embodiment)

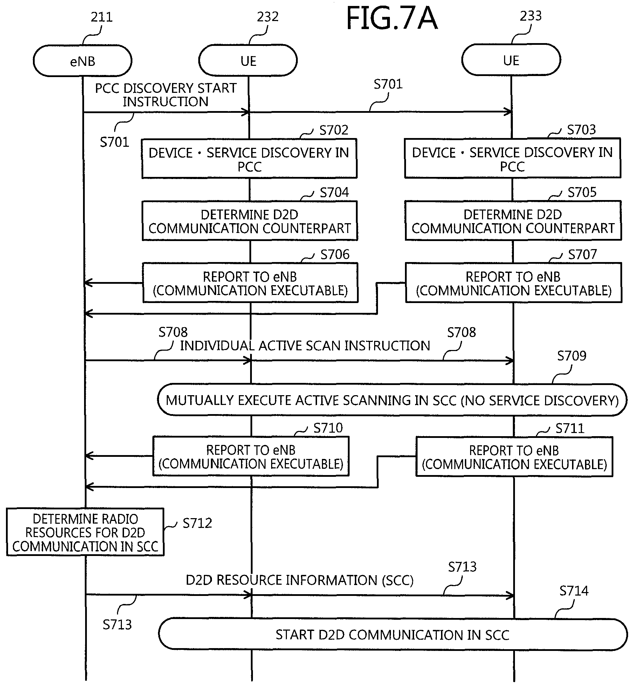

FIG. 7A is a diagram of a first operation example of the wireless communications system according to the second embodiment. The wireless communications system 200 according to the second embodiment operates according to the process steps depicted in, for example, FIG. 7A. The eNB 211 transmits a PCC discovery start instruction that instructs the start of the discovery sessions (step S701). It is assumed in the example depicted in FIG. 7A that the PCC discovery start instruction transmitted at step S701 is received by the UEs 232 and 233.

The UE 232 executes the device service discovery in the PCC, based on the PCC discovery start instruction transmitted at step S701 (step S702). The UE 233 executes the device·service discovery in the PCC, based on the PCC discovery start instruction transmitted at step S701 (step S703).

The UE 232 determines the D2D communication counterpart based on the result of the discovery sessions executed at step S702 (step S704). It is assumed in this case that the UE 232 detects the UE 233 as the UE located near the UE 232 and capable of executing the D2D communication service with the UE 232, and determines that the UE 233 is the D2D communication counterpart thereof.

The UE 233 determines the D2D communication counterpart, based on the result of the discovery sessions executed at step S703 (step S705). It is assumed in this case that the UE 233 detects the UE 232 as the UE located near the UE 233 and capable of executing the D2D communication service with the UE 233, and determines that the UE 232 is the D2D communication counterpart thereof.

The UE 232 reports the result of the device·service discovery executed at step S702 to the eNB 211 (step S706). For example, the UE 232 transmits to the eNB 211, a report that indicates that D2D communication in the PCC is executable (communication executable) and that includes information indicating the D2D communication counterpart (the UE 233) determined at step S704.

The UE 233 reports the result of the device·service discovery executed at step S703 to the eNB 211 (step S707). For example, the UE 233 transmits to the eNB 211 a report that indicates that the D2D communication in the PCC is executable (communication executable) and that includes information indicating the D2D communication counterpart (the UE 232) determined at step S705.

The eNB 211 transmits an individual active scan instruction that instructs the active scanning to each of the UEs 232 and 233, based on the reports from the UEs 232 and 233 transmitted at steps S706 and S707 (step S708). At this step, eNB 211 may assign to the UEs 232 and 233, the radio resources for the UEs 232 and 233 to transmit the active scan signals, and may notify the UEs 232 and 233 of the radio resources assigned thereto using the active scan instructions.

The UEs 232 and 233 mutually execute the active scanning in the SCC (step S709). For example, the UEs 232 and 233 execute the active scanning by mutually transmitting and receiving the active scan signals. Because it is however already assured by the service discovery executed at steps S702 and S703 that the UEs 232 and 233 each support a predetermined D2D communication service, whether the UEs 232 and 233 can mutually communicate in the SCC only has to be checked at step S709. The device discovery therefore only has to be executed and the service discovery does not have to be executed at step S709.

The UE 232 reports to the eNB 211, the result of the active scanning executed at step S709 (step S710). In the example depicted in FIG. 7A, the UE 232 transmits a report indicating that the D2D communication in the SCC is executable (communication executable) to the eNB 211. The UE 233 reports to the eNB 211, the result of the active scanning executed at step S709 (step S711). In the example depicted in FIG. 7A, the UE 233 transmits a report indicating that the D2D communication in the SCC is executable (communication executable) to the eNB 211.

The eNB 211 determines the radio resources for the D2D communication executed by the UEs 232 and 233 in the SCC, based on the reports from the UEs 232 and 233 transmitted at steps S710 and S711 (step S712).

The eNB 211 transmits the D2D resource information that indicates the SCC radio resources determined at step S712, to each of the UEs 232 and 233 (step S713). The UEs 232 and 233 mutually start the D2D communication in the SCC using the radio resources in the SCC indicated by the D2D resource information transmitted at step S713 (step S714).

### (Second Operation Example of Wireless Communications System According to Second Embodiment)

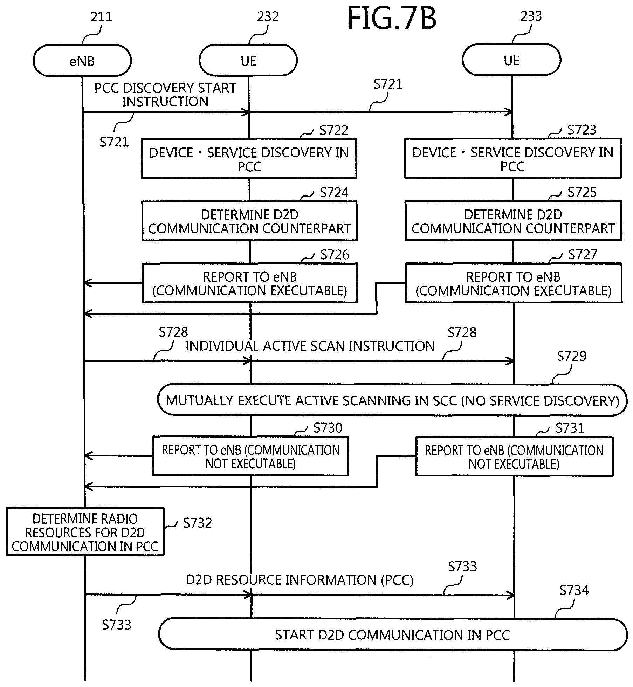

FIG. 7B is a diagram of a second operation example of the wireless communications system according to the second embodiment. The wireless communications system 200 according to the second embodiment may operate according to the process steps depicted in, for example, FIG. 7B. Steps S721 to S731 depicted in FIG. 7B are same as steps S701 to S711 depicted in FIG. 7A. It is however assumed in the example depicted in FIG. 7B that the UEs 232 and 233 determine in the active scanning executed at step S729 that the UEs 232 and 233 cannot mutually execute the D2D communication in the SCC.

In this case, at step S730, the UE 232 transmits a report indicating that the D2D communication in the SCC is not executable (communication not executable) to the eNB 211. At step S731, the UE 233 transmits a report indicating that the D2D communication in the SCC is not executable (communication not executable) to the eNB 211.

The eNB 211 determines the radio resources for the D2D communication executed by the UEs 232 and 233 in the PCC, based on the reports from the UEs 232 and 233 transmitted at steps S730 and S731 (step S732).

The eNB 211 transmits D2D resource information that indicates the PCC communication carrier determined at step S732 to each of the UEs 232 and 233 (step S733). The UEs 232 and 233 mutually start the D2D communication in the PCC using the radio resources in the PCC indicated by the D2D resource information transmitted at step S733 (step S734).

As described, according to the second embodiment, the active scanning (Probing) in the SCC is executed after the discovery in the PCC. For example, in the PCC, the device service discovery (the passive scanning) using a discovery signal having a relatively large size is executed. In the SCC, the active scanning (communication confirmation with a specific counterpart) is executed.

Because the service discovery is unnecessary in the active scanning, the size of the discovery signal may be reduced to be relatively small. The traffic for the discovery in the SCC may therefore be reduced and reduction of the congestion of the SCC may be facilitated by executing the active scanning in the SCC. For example, even when the SCC is an unlicensed band to be a channel shared with other communication systems, the communication therefore may be executed efficiently, suppressing any influence on the other communication systems.

Even when the D2D communication in the SCC is not executable as a result of the active scanning in the SCC, because it is already assured that the D2D communication in the PCC is executable, for example, the D2D communication is executable in the PCC even when discovery is not again executed.

### (Third Embodiment)

A third embodiment will be described for portions different from the second embodiment.

### (Start Control Process of D2D Communication by eNB According to Third Embodiment)

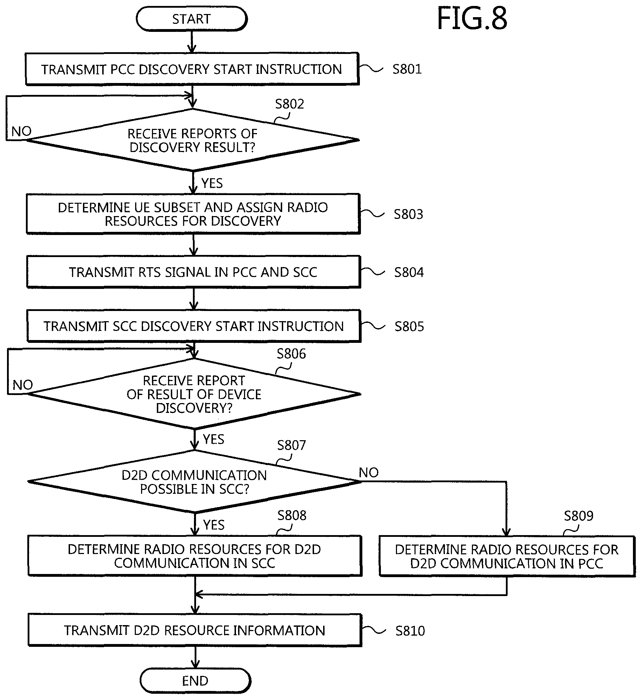

FIG. 8 is a flowchart of an example of a start control process of the D2D communication by the eNB according to the third embodiment. The eNB 300 according to the third embodiment executes, for example, the process steps depicted in FIG. 8 as the start control process of the D2D communication. Steps S801 and S802 are same as steps S501 and S502 depicted in FIG. 5.

Subsequent to step S802, the eNB 300 executes determination of a UE subset and assignment of the radio resources for the discovery, based on the D2D communication counterpart indicated by the report of the result of the discovery sessions received at step S802 (step S803).

The UE subset is a set of UEs that each reports to the eNB 300 that the UE can execute the D2D communication. The UE subset is a sum set of pairs of UEs for which the pairing for the D2D links is completed based on the PCC discovery start instruction transmitted at step S801. The radio resources for the discovery are the radio resources for the device discovery in the SCC.

The eNB 300 transmits an RTS (Request To Send) signal in the PCC and the SCC (step S804). The RTS signal transmitted at step S804 is a RTS signal to request the reservation of the radio resources assigned as the radio resources for the discovery at step S803.

The eNB 300 transmits the SCC discovery start instruction for the UEs in the subset determined at step S803 (step S805). The SCC discovery start instruction is a signal that instructs the device discovery executed by the passive scanning in the SCC.

The eNB 300 determines whether the eNB 300 has received a report of the result of the device discovery in response to the SCC discovery start instruction transmitted at step S805 (step S806) and waits until the eNB 300 receives the report of the result of the device discovery (step S806: NO). The report of the result of the device discovery includes, for example, information indicating the D2D communication counterpart determined by each of the UEs. When eNB 300 determines that the eNB 300 has received the report of the result of the device discovery (step S806: YES), the eNB 300 advances to the operation at step S807.

Steps S807 to S810 depicted in FIG. 8 are the same as at steps S505 to S508 depicted in FIG. 5. The eNB 300 however assigns the radio resources for the D2D communication in the SCC to each pair of UEs reporting that the pair can execute the D2D communication in the SCC, in the UE subset. The eNB 300 assigns the radio resources for the D2D communication in the PCC to each pair of UEs reporting that the pair cannot execute the D2D communication in the SCC in the UE subset. Each of the UEs starts the D2D communication using the radio resources (in the PCC or the SCC) for the D2D communication assigned thereto by the eNB 300.

### (Start Process of D2D Communication by UE According to Third Embodiment)

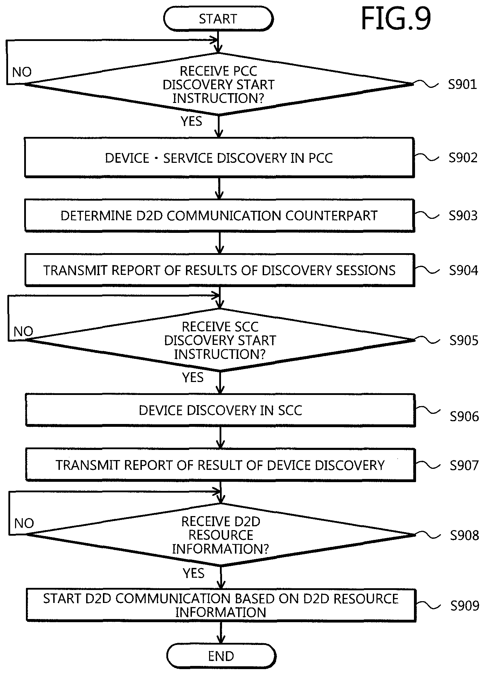

FIG. 9 is a flowchart of an example of a start process of the D2D communication by a UE according to the third embodiment. The UE 400 according to the third embodiment executes, for example, the process steps depicted in FIG. 9 as the start process of the D2D communication. Steps S901 to S904 depicted in FIG. 9 are the same as at steps S601 to S604 depicted in FIG. 6.

Subsequent to step S904, the UE 400 determines whether the UE 400 receives the SCC discovery start instruction (step S905) and waits until the UE 400 receives the SCC discovery start instruction (step S905: NO). When the UE 400 determines that the UE 400 has received the SCC discovery start instruction (step S905: YES), the UE 400 executes the device discovery in the SCC (step S906). The device discovery executed at step S906 may be executed by, for example, the passive scanning to transmit and receive the passive scan signal.

The UE 400 transmits a report of the result of the device discovery executed at step S906 to the eNB 300 (step S907). The report of the result of the discovery sessions transmitted at step S907 includes, for example, information indicating whether the D2D communication in the SCC is executable with the D2D communication counterpart determined at step S903. Steps S908 and S909 are the same as at steps S608 and S609 depicted in FIG. 6.

### (First Operation Example of Wireless Communications System According to Third Embodiment)

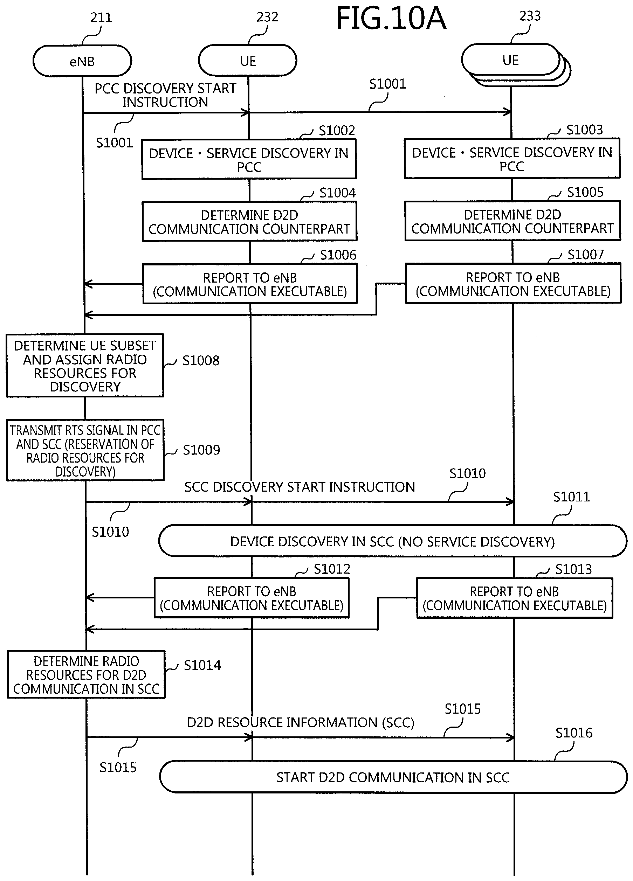

FIG. 10A is a diagram of a first operation example of the wireless communications system according to the third embodiment. The wireless communications system 200 according to the third embodiment operates according to the process steps depicted in, for example, FIG. 10A. Steps S1001 to S1007 depicted in FIG. 10A are the same as steps S701 to S707 depicted in FIG. 7A.

It is assumed in the example depicted in FIG. 10A that not only the UEs 232 and 233 but also plural pairs of UEs report to the eNB 211 that the UEs are mutually capable of the D2D communication as the result of the device service discovery. In response to this, the eNB 211 executes the determination of the UE subset and the assignment of the radio resources for the discovery, based on the reports from the UEs (step S1008).

The eNB 300 transmits the RTS signal that requests the reservation of the radio resources assigned as the radio resources for the discovery at step S1008, in the PCC and the SCC (step S1009).

The eNB 300 transmits the SCC discovery start instruction to the UEs included in the UE subset determined at step S1008 (step S1010).

The UEs included in the UE subset (including the UEs 232 and 233) mutually execute the device discovery in the SCC (step S1011). At step S1011, for example, the UEs each execute the passive scan by mutually transmitting and receiving the passive scan signals.

It is however already assured by the service discovery executed at steps S1002 and S1003 that the UEs support the predetermined D2D communication service and, at step S1011, therefore, it only has to be checked whether the UEs can mutually execute communication in the SCC. At step S1011, the device discovery only has to be executed and the service discovery does not have to be executed.

The UE 232 reports the result of the device discovery executed at step S1011 to the eNB 211 (step S1012). In the example depicted in FIG. 10A, the UE 232 transmits to the eNB 211, a report that indicates that the D2D communication in the SCC is executable (communication executable) and that includes the information indicating the D2D communication counterpart (the UE 233) determined at step S1004.

The UE 233 reports the result of the active scanning executed at step S1011 to the eNB 211 (step S1013). In the example depicted in FIG. 10A, the UE 233 transmits to the eNB 211 a report that indicates that the D2D communication in the SCC is executable (communication executable) and that includes the information indicating the D2D communication counterpart (the UE 232) determined at step S1005.

The eNB 211 may thereby determine that the UEs 232 and 233 can execute the D2D communication in the SCC. Each UE different from the UEs 232 and 233 of the UEs included in the UE subset also reports to the eNB 211 similarly to the UEs 232 and 233. Steps S1014 to S1016 depicted in FIG. 10A are the same as steps S712 to S714 depicted in FIG. 7A.

The eNB 211 also assigns the radio resources for the D2D communication in the SCC to the UEs that are different from the UEs 232 and 233 of the UEs included in the UE subset and that each report that the UE can execute the D2D communication in the SCC. When the UEs included in the UE subset can execute the D2D communication in the SCC, the radio resources of the SCC are assigned to the UEs and the UEs can each start the D2D communication in the SCC.

### (Second Operation Example of Wireless Communications System According to Third Embodiment)

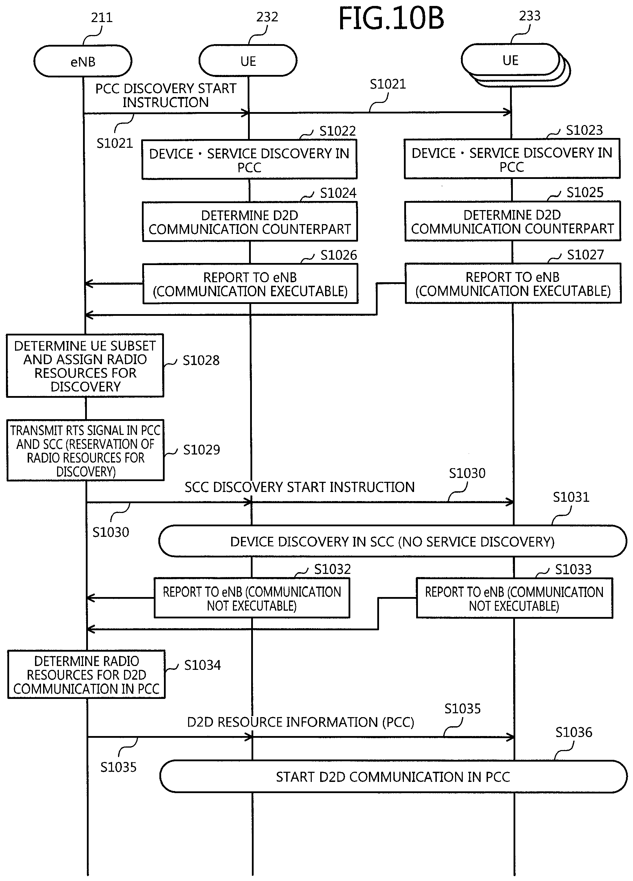

FIG. 10B is a diagram of a second operation example of the wireless communications system according to the third embodiment. Steps S1021 to S1033 depicted in FIG. 10B are the same as steps S1001 to S1013 depicted in FIG. 10A. It is however assumed in the example depicted in FIG. 10B that the UEs 232 and 233 determine that the UEs 232 and 233 cannot mutually execute the D2D communication in the SCC.

In this case, at step S1032, the UE 232 transmits to the eNB 211, a report indicating that the D2D communication in the SCC is not executable (communication not executable). At step S1033, the UE 233 transmits to the eNB 211, a report indicating that the D2D communication in the SCC is not executable (communication not executable).

The eNB 211 determines the radio resources for the D2D communication to be used by the UEs 232 and 233 in the PCC, based on the reports from the UEs 232 and 233 transmitted at steps S1032 and S1033 (step S1034).

The eNB 211 transmits the D2D resource information that indicates the PCC radio resources determined at step S1034, to each of the UEs 232 and 233 (step S1035). The UEs 232 and 233 mutually start the D2D communication in the PCC using the radio resources in the PCC indicated by the D2D resource information transmitted at step S1035 (step S1036).

### (Transmission of Discovery Signal in SCC)

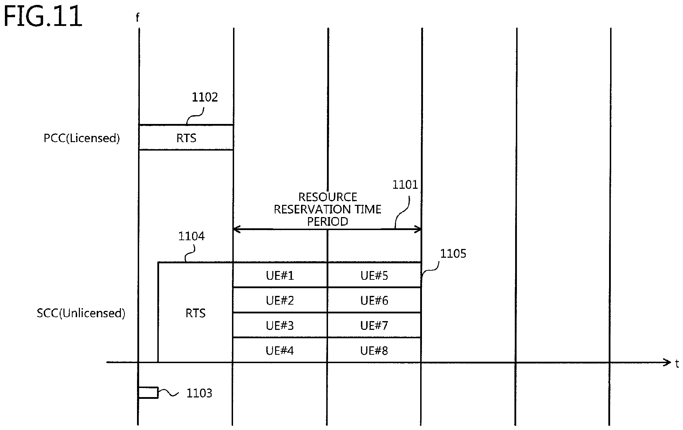

FIG. 11 is a diagram of an example of the transmission of the discovery signal in the SCC. In FIG. 11, the horizontal axis represents the time resources (t) and the vertical axis represents the frequency resources (f). "PCC" on the vertical axis represents the band of the PCC that is a licensed band. "SCC" on the vertical axis represents the band of the SCC that is an unlicensed band.

It is assumed in the example depicted in FIG. 11 that the UE subset determined by the eNB 211 at step S1008 of FIG. 10A includes, for example, eight UEs of UEs #1 to #8. It is also assumed as an example that the UE #1 and the UE #5 form a pair of UEs that each determines that the UEs can mutually execute the D2D communication in the PCC. It is also assumed that the UE #2 and the UE #6, the UE #3 and the UE #7, and the UE #4 and the UE #8 are each the D2D communication counterparts of each other.

A resource reservation time period 1101 is, for example, a time period of the radio resources for the discovery assigned by the eNB 211 at step S1008 of FIG. 10A.

For example, at step S1009 of FIG. 10A, the eNB 211 transmits an RTS signal 1102 of the PCC. The eNB 211 transmits an RTS signal 1104 of the SCC after carrier sensing 1103. Each of the RTS signals 1102 and 1104 is an RTS signal that requests the reservation of the SCC in the resource reservation time period 1101.

When the UEs other than those in the UE subset each receive, for example, the RTS signal 1104 of the SCC, these UEs do not execute any radio transmission in the SCC in the resource reservation time period 1101 indicated by the RTS signal 1104. Each of the UEs in the UE subset may thereby occupy a channel for the RTS signal 1104.

For example, at step S1011 of FIG. 10A, the UEs #1 to #8 execute the device discovery 1105 in the SCC using the radio resources of the SCC for the discovery indicated by the RTS signals 1102 and 1104. At this time, the UEs #1 to #8 may execute the device discovery 1105 using arbitrary radio resources of the SCC in the resource reservation time period 1101.

For example, the UEs #1 and #5 (for example, the UEs 232 and 233) determining that the UEs #1 and #5 can mutually execute the D2D communication in the PCC determine whether the UEs #1 and #5 can mutually execute the D2D communication also in the SCC, by transmitting and receiving the passive scan signals at different times in the SCC in the resource reservation time period 1101. In the time period in which a UE transmits a signal, the UE usually cannot receive a signal at the equal carrier frequency. The UEs #1 and #5 cannot respectively receive the passive scan signals transmitted by the UEs #2 to #4 and #6 to #8.

When the UEs #1 and #5 determine that the UEs #1 and #5 can mutually execute the D2D communication also in the SCC, the UEs #1 and #5 report the determination at, for example, steps S1012 and S1013 of FIG. 10A. The eNB 211 thereby assigns the SCC radio resources for the D2D to the UEs #1 and #5, and the UEs #1 and #5 can start the D2D communication in the SCC.

When the UEs #1 and #5 determine that the UEs #1 and #5 cannot mutually execute the D2D communication in the SCC, the UEs #1 and #5 report such indication at, for example, steps S1032 and S1033 of FIG. 10B. The eNB 211 thereby assigns the radio resources of the PCC for the D2D to the UEs #1 and #5, and the UEs #1 and #5 can start the D2D communication in the PCC.

When the SCC is an unlicensed band similar to a radio LAN (Local Area Network), an RTS signal defined in the radio LAN may be used as the RTS signal 1104. Thus, interference may be suppressed from the radio LAN to the device discovery 1105.

In this case, for example, the LTE terminal cannot recognize the RTS signal 1104. To cope with this, interference may be suppressed from the LTE terminal to the device discovery 1105, by also transmitting the RTS signal 1102 of the PCC that is recognizable by the LTE terminal.

As described, interferences may be suppressed from both of the LTE terminal and the radio LAN to the device discovery 1105 by transmitting the RTS signal 1102 recognizable by the LTE terminal in the PCC and transmitting the RTS signal 1104 defined in the radio LAN in the SCC.

As described, according to the third embodiment, the passive scanning with the limited UEs is executed in the SCC after the discovery in the PCC. For example, the eNB 211 determines the UE subset whose UEs are caused to mutually scan in the SCC based on the result of the discovery in the PCC, and assigns the radio resources for the discovery to the UE subset. Each of the UEs included in the UE subset can thereby execute the passive scanning in the SCC using the radio resources for the discovery assigned thereto by the eNB 211.

Thus, transmission and reception of the discovery signal by the UE not executing the D2D communication may be suppressed and the traffic for the discovery in the SCC may be reduced, enabling reduction of the congestion of the SCC to be facilitated. The UEs transmitting and receiving the discovery signals are reduced, whereby increase of the time period necessary for the discovery may be reduced, which is a problem in the case, for example, where the discovery is executed in the SCC that is a shared channel.

Compared to, for example, a case where active scanning is used in executing the discovery in the SCC, no individual active scan instruction may be transmitted to each of the UEs that each execute the discovery in the SCC. The traffic for the discovery in the SCC may be reduced and the reduction of the congestion of the SCC may be facilitated.

Thus, communication may be efficiently executed suppressing any effects on other communication systems even when, for example, the SCC is an unlicensed band to be the shared channel with the other communication systems.

The D2D communication may be executed in the PCC even without, for example, executing again any discovery because it is already assured that the D2D communication in the PCC is executable even when the D2D communication in the SCC is not executable as the result of the passive scanning in the SCC.

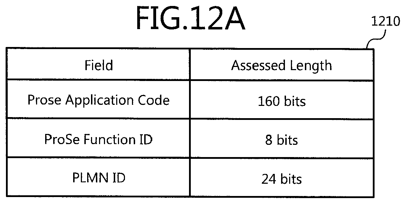

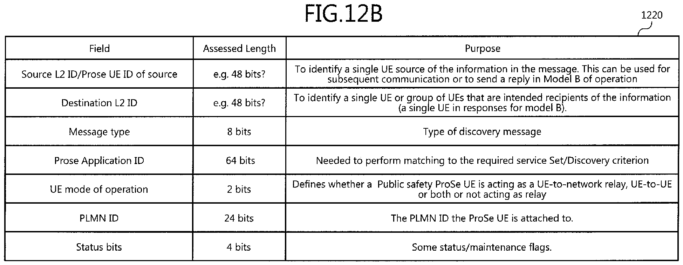

FIG. 12A and FIG. 12B are diagrams of an example of the discovery message. A mechanism is discussed for the LTE-Advanced to realize direct wireless communication between terminals. For example, a method is discussed according to which each terminal transmits a discovery signal, another terminal present around the terminal detects the discovery signal, and the device capable of executing the direct communication and information concerning the services supplied by the device are obtained.

It is discussed that each terminal transmits, for example, a discovery message 1210 depicted in FIG. 12A or a discovery message 1220 depicted in FIG. 12B, as the discovery signal in the above case. The discovery message 1210 is a 192-bit discovery message in "Non-public safety open discovery use case". The discovery message 1220 is a discovery message in "Public safety use case".

For example, the discovery message 1210 or the discovery message 1220 including the information concerning the services supplied by the device is usable as the passive scan signal. On the other hand, a discovery message not including any information concerning the services supplied by the device is usable as the active scan message.

As described, according to the wireless communications system, the terminal, the base station, and the processing method, the D2D communication in the SCC is enabled even when the frequencies of the PCC and the SCC differ from each other.

For example, conventionally, a method has been discussed according to which an unlicensed band is used as an additional carrier in the LTE that uses a licensed band taking into consideration an impact to the current LTE specification. In this method, as to the transmission of control information, use of, for example, a carrier of a licensed band is discussed.

For this method, for example, a method of coexisting with a radio LAN in an unlicensed band, and the like are discussed. A scenario is also discussed to use the unlicensed band not only for the communication between an eNB and a UE but also for the D2D communication.

For example, in a case where the discovery is executed in the PCC (a licensed band) and the SCC (unlicensed band), when the frequencies of the PCC and the SCC differ from each other (for example, that of the PCC is 2 [GHz] and that of the SCC is 5.8 [GHz]), mismatching occurs. For example, such cases can be considered as where a device detected in the PCC cannot communicate because the propagation property is different in the SCC.

In contrast, a method may be considered according to which the procedure for the discovery executed in the PCC is executed as it is in the SCC while, in this case, the following problem arises. The SCC is a shared channel and CSMA/CA (Carrier Sense Multiple Access/Collision Avoidance) or the like is therefore used for the access control of the channel. The base station therefore cannot execute accurate scheduling and cannot execute access control for each sub-band as a unit, and the efficiency of the discovery may therefore be low compared to that of the

### PCC.

In contrast, according to the embodiments, in the PCC, the device and service discovery using the discovery signal having a relatively large size (the passive scanning) may be executed. In the SCC, the active scanning with which the size of the discovery signal may be reduced or the passive scanning for limited terminals may be executed.

In the discovery for the communication between devices, any mismatching of the discovery may thereby be avoided when the frequencies of the PCC and the SCC differ from each other. The traffic for the discovery in the SCC may be reduced. Thus, improvement of the efficiency of the discovery in the SCC may be facilitated when the D2D communication is executed in the PCC and the SCC whose frequencies differ from each other.

### EXPLANATIONS OF LETTERS OR NUMERALS

- 100, 200: wireless communications system
- 110, 120: terminals
- 111: detecting unit
- 112: communicating unit
- 130: base station
- 131: control unit
- 211 to 213, 300: eNB
- 221 to 223: macro cell
- 231 to 239, 400: UE
- 301, 316, 401: antenna
- 302, 315, 402, 420: radio processing unit
- 303, 403, 417, FFT: processing unit
- 304, 406: demodulating unit
- 305, 407: decoding unit
- 306: MAC·RLC processing unit
- 307: radio resource control unit
- 308: MAC control unit
- 309: packet generating unit
- 310: MAC scheduling unit
- 311: encoding unit
- 312: modulating unit
- 313, 414, 416: multiplexing unit
- 314, 405, 419: IFFT processing unit 314
- 350: wireless communications apparatus
- 351: transmitting and receiving antenna
- 352, 359: amplifier
- 353, 358: multiplying unit
- 354: analog-digital converter
- 355: processor
- 356: memory
- 357: digital-analog converter
- 360: oscillator
- 404: equalization processing unit
- 408: response signal detecting unit
- 409: discovery signal detecting unit
- 410: carrier sensing unit
- 411: control information processing unit
- 412: discovery signal generating unit
- 413: data processing unit
- 415: symbol mapping unit 415
- 418: frequency mapping unit
- 1101: resource reservation time period
- 1102, 1104: RTS signal
- 1103: carrier sensing
- 1105: device discovery
- 1210, 1220: discovery message

## Claims

1. A wireless communications system comprising:
a first terminal configured to use a first detection signal of a first band and detect a second terminal capable of performing direct wireless communication with the first terminal in the first band, the first terminal determining whether the first terminal is able to perform direct wireless communication with the second terminal in a second band, by transmitting a second detection signal of the second band addressed to the detected second terminal, the first terminal performing direct wireless communication with the second terminal in at least one of the first band and the second band, based on a result of determination; and
a base station to which the first terminal is connected, the base station controlling transmission of the first detection signal and the second detection signal.

2. The wireless communications system according to claim 1, wherein
the first terminal detects the second terminal among terminals present around the first terminal by receiving the first detection signal transmitted from the terminals around the first terminal, and
the first terminal transmits the second detection signal addressed to the second terminal, and determines whether the first terminal is able to perform direct wireless communication with the second terminal in the second band, by receiving a response signal from the second terminal in response to the transmitted second detection signal.

3. The wireless communications system according to claim 1 or 2, wherein
the base station transmits a first signal that instructs transmission of the first detection signal to the first terminal connected to the base station,
the base station receives from the first terminal, a result of the detection of the second terminal using the first detection signal, and
the base station transmits to the first terminal, a second signal that instructs transmission of the second detection signal.

4. The wireless communications system according to any one of claims 1 to 3, wherein
the base station assigns to the first terminal, radio resources of the second band for transmission of the second detection signal, and
the first terminal transmits the second detection signal using the radio resources assigned thereto by the base station.

5. The wireless communications system according to any one of claims 1 to 4, wherein
the first band is a band dedicated to the wireless communications system, and
the second band is a band shared between the wireless communications system and a second wireless communications system.

6. The wireless communications system according to any one of claims 1 to 5, wherein
the first terminal detects the second terminal capable of performing direct wireless communication with the first terminal in the first band by passive scanning using the first detection signal, and
the first terminal determines whether the first terminal is able to perform direct wireless communication with the second terminal in the second band, by active scanning by transmitting the second detection signal.

7. A first terminal comprising:
a detecting unit configured to use a first detection signal of a first band and detect a second terminal capable of performing direct wireless communication with the first terminal in the first band, and determine whether direct wireless communication with the second terminal is possible in a second band, by transmitting a second detection signal of the second band addressed to the detected second terminal; and
a communicating unit configured to perform the direct wireless communication with the second terminal in at least one of the first band and the second band, based on a result of determination by the detecting unit.

8. A base station comprising
a control unit configured to execute control to cause a first terminal connected to the base station to:
use a first detection signal of a first band and detect a second terminal capable of performing direct wireless communication with the first terminal in the first band;
determine whether direct wireless communication with the second terminal is possible in a second band, by transmitting a second detection signal of the second band addressed to the second terminal detected by the first terminal; and
perform the direct wireless communication with the second terminal in at least one of the first band and the second band based on a result of determination.

9. A processing method executed by a first terminal, comprising:
detecting a second terminal capable of performing direct wireless communication with the first terminal in a first band, by using a first detection signal of the first band;
determining whether direct wireless communication with the second terminal is possible in the second band, by transmitting a second detection signal of the second band addressed to the detected second terminal; and
performing direct wireless communication with the second terminal in at least one of the first band and the second band based on a result of determination.

10. A processing method executed by a base station to which a first terminal is connected, the processing method comprising
executing control to cause the first terminal to:
use a first detection signal of a first band and detect a second terminal capable of performing direct wireless communication with the first terminal in the first band;
determine whether direct wireless communication with the second terminal is possible in a second band, by transmitting a second detection signal of the second band addressed to the second terminal detected by the first terminal; and
perform the direct wireless communication with the second terminal in at least one of the first band and the second band based on a result of determination.

11. A wireless communications system comprising:
a plurality of terminals each mutually detecting another terminal capable of performing direct wireless communication with the terminal in the first band, using a first detection signal of a first band, the terminals detected among the plurality of terminals by the first detection signal each determining whether the terminal is able to mutually perform direct wireless communication in the second band, by mutually transmitting a second detection signal of the second band, the plurality of terminals performing direct wireless communication in at least one of the first band and the second band based on a result of determination; and
a base station to which the plurality of terminals are connected, the base station controlling transmission of the first detection signal and the second detection signal.

12. The wireless communications system according to claim 11, wherein
the plurality of terminals each detecting another terminal from terminals present around the terminal by receiving the first detection signal transmitted from the terminals present around the terminal, and
the detected terminals each determining whether the terminal is able to mutually perform direct wireless communication in the second band, by detecting a terminal capable of performing direct wireless communication with the terminal in the second band, based on the second detection signal transmitted from the other terminal among the detected terminals.

13. The wireless communications system according to claim 11 or 12, wherein
the base station transmits to a terminal connected to the base station, a first signal that instructs transmission of the first detection signal,
the base station receives from the terminal, a result of detection of another terminal executed using the first detection signal, and
the base station transmits to the detected terminal based on the received result, a second signal that instructs transmission of the second detection signal.

14. The wireless communications system according to claim 13, wherein
the base station assigns radio resources of the second band for the detected terminals to transmit the second detection signal, and
the detected terminals each mutually transmits the second detection signal using the radio resources assigned by the base station.

15. The wireless communications system according to any one of claims 11 to 14, wherein
the base station transmits in the second band, a reservation signal that reserves radio resources of the second band for transmission of the second detection signal, and
the detected terminals each mutually transmits the second detection signal using the radio resources reserved by the reservation signal.

16. The wireless communications system according to any one of claims 11 to 15, wherein
the base station transmits in the first band and the second band, a reservation signal that reserves radio resources of the second band for transmission of the second detection signal.

17. A first terminal comprising:
a detecting unit configured to detect a second terminal capable of performing direct wireless communication in a first band, by using a first detection signal of the first band and by which the first terminal and the second terminal mutually detect each other, and when the first terminal is detected by the first detection signal, the detecting unit determining whether direct wireless communication is executable in a second band, by mutually transmitting together with the detected second terminal, a second detection signal of the second band; and
a communicating unit configured to perform the direct wireless communication in at least one of the first band and the second band, based on a result of determination by the detecting unit.

18. A base station comprising
a control unit configured to execute control to:
cause a plurality of terminals connected to the base station to mutually detect other terminals capable of performing direct wireless communication with the terminal in a first band, by using a first detection signal of the first band; and
cause each of the terminals detected by the first detection signal among the plurality of terminals to determine whether each of the terminals is able to mutually perform direct wireless communication in a second band, by mutually transmitting a second detection signal of the second band, and to perform direct wireless communication in at least one of the first band and the second band based on a result of determination.

19. A processing method executed by a first terminal, the method comprising:
detecting a second terminal capable of performing direct wireless communication in a first band, by using a first detection signal of the first band and by which the first terminal and the second terminal mutually detect each other;
determining, when the first terminal is detected by the first detection signal, whether direct wireless communication is mutually executable in a second band, by mutually transmitting a second detection signal of the second band together with the second terminal detected by the first detection signal; and
executing the direct wireless communication in at least one of the first band and the second band, based on a result of determination.

20. A processing method executed by a base station to which a plurality of terminals are connected, the method comprising:
executing control to:
cause the plurality of terminals connected to the base station to each mutually detect terminals capable of performing direct wireless communication with the terminal in a first band, by using a first detection signal of the first band;
cause each of the terminals detected by the first detection signal among the plurality of terminals to determine whether direct wireless communication is mutually executable in a second band, by mutually transmitting a second detection signal of the second band, and to perform direct wireless communication in at least one of the first band and the second band, based on a result of determination.
